# EUROPÄISCHE PATENTANMELDUNG

(11) **EP 4 817 812 A1**
(43) Veröffentlichungstag der Anmeldung: **07.10.2026**
(21) Anmeldenummer: 26170283.1
(22) Anmeldetag: 01.04.2026
(51) Int. Cl.: B25J 9/16

(54) **VERFAHREN UND SYSTEM ZUM KALIBRIEREN EINER KAMERA MITTELS EINES ROBOTERARMS**

(30) Priorität: 04.04.2025 DE 102025113361
(71) Anmelder: KUKA Deutschland GmbH, 86165 Augsburg (DE)
(72) Erfinder: GEIER, Sebastian, 86159 Augsburg (DE); SAFRONOV, Kirill, 86447 Aindling (DE)
(74) Vertreter: Dorow, Florian

(57) **Zusammenfassung**

Ein Verfahren zum Kalibrieren einer Kamera (2) mittels eines Roboterarms (10) und einer Kalibrierreferenz (3), wobei die Kamera oder Kalibrierreferenz an einem distalen Glied (12) des Roboterarms angeordnet und die Kalibrierreferenz oder Kamera relativ zu einer proximalen Basis (11) des Roboterarms ortsfest ist, umfasst die Schritte: Erfassen (S10) der Kalibrierreferenz mit der Kamera in einer Startpose des Roboterarms; automatisiertes Durchführen (S50) mehrerer Suchzyklen, wobei in jedem Suchzyklus mit dem Roboterarm eine andere Pose angefahren und in dieser mit der Kamera wenigstens ein Bild von der Kalibrierreferenz aufgenommen wird und wenigstens ein Suchzyklus auf Basis der Startpose durchgeführt wird; und Ermitteln einer Transformation (S60) zwischen einem kamerafesten Referenzsystem (K) und einem roboterarmfesten Referenzsystem (R) auf Basis der aufgenommenen Bilder und der Posen des Roboterarms, in denen diese aufgenommen worden sind.

Die Erfindung betrifft außerdem ein System bzw. Computerprogramm(produkt).

## Beschreibung

Die vorliegende Erfindung betrifft ein Verfahren und System zum Kalibrieren einer Kamera mittels eines Roboterarms und einer Kalibrierreferenz sowie ein Computerprogramm bzw. Computerprogrammprodukt zur Durchführung des Verfahrens.

Aufgabe der vorliegenden Erfindung ist es, das Kalibrieren einer Kamera zu verbessern.

Diese Aufgabe wird durch ein Verfahren mit den Merkmalen des Anspruchs 1 gelöst. Ansprüche 10, 11 stellen ein zur Durchführung eines hier beschriebenen Verfahrens eingerichtetes bzw. verwendetes System bzw. Computerprogramm bzw. Computerprogrammprodukt unter Schutz. Die Unteransprüche betreffen vorteilhafte Weiterbildungen.

Nach einer Ausführung der vorliegenden Erfindung ist, in einer Weiterbildung wird, eine Kamera an einem distalen Glied eines Roboterarms angeordnet und eine Kalibrierreferenz ist relativ zu einer proximalen Basis des Roboterarms ortsfest (angeordnet).

Nach einer alternativen Ausführung der vorliegenden Erfindung ist, in einer Weiterbildung wird, umgekehrt die Kalibrierreferenz an dem distalen Glied des Roboterarms angeordnet und die Kamera ist relativ zu der proximalen Basis des Roboterarms ortsfest (angeordnet).

Auf diese Weise können durch Bewegen des (distalen Glieds des) Roboterarms Kamera und Kalibrierreferenz relativ zueinander bewegt werden, so dass sich ein mit der Kamera von der Kalibrierreferenz aufgenommenes Bild bzw. ein(e) Abbild bzw. Ansicht, insbesondere Position, Orientierung, Größe und/oder Perspektive, der Kalibrierreferenz in dem Kamerabild ändert. Aus dem Vergleich mehrerer mit der Kamera in unterschiedlichen Posen des Roboterarms von der Kalibrierreferenz aufgenommener Bilder kann aus den unterschiedlichen (Abbildern bzw. Ansichten der Kalibrierreferenz in den) Kamerabildern in an sich bekannter Weise eine Transformation zwischen einem kamerafesten Referenzsystem und einem roboterarmfesten Referenzsystem, in einer Ausführung, insbesondere bei an dem distalen Glied des Roboterarms angeordneter Kamera, zwischen einem kamerafesten Referenzsystem und einem relativ zu dem distalen Glied ortsfesten Referenzsystem oder in einer anderen Ausführung, insbesondere bei an dem distalen Glied des Roboterarms angeordneter Kalibrierreferenz, zwischen einem kamerafesten Referenzsystem und einem relativ zu der proximalen Basis ortsfesten Referenzsystem, ermittelt werden.

Das distale Glied kann insbesondere ein werkzeugseitiges bzw. Endglied des Roboterarms sein, die proximale Basis insbesondere eine stationäre bzw. umgebungsfeste Basis. Distales Glied und proximale Basis sind vorzugsweise über wenigstens drei, insbesondere wenigstens sechs, Gelenke, in einer Weiterbildung Drehgelenke, miteinander verbunden.

Die Kalibrierreferenz weist in einer Ausführung, vorzugsweise vorab, bekannte Merkmale, beispielsweise Abmessungen und/oder Markierungen, beispielsweise Muster oder dergleichen, auf. Vorzugsweise kann die Kalibrierreferenz flächig bzw. plattenartig ausgebildet sein, was ihre Handhabung und/oder Erfassung verbessern kann.

Ein hier genanntes kamerafestes Referenzsystem und/oder roboterarmfestes Referenzsystem ist in einer Ausführung (jeweils) ein, in einer Weiterbildung kartesisches, Koordinatensystem.

Nach einer Ausführung der vorliegenden Erfindung weist ein Verfahren zum Kalibrieren der Kamera mittels des Roboterarms und der Kalibrierreferenz den Schritt auf:
- Erfassen der Kalibrierreferenz mit der Kamera in einer Startpose des Roboterarms.

In einer Ausführung umfasst das Verfahren den Schritt:
- Anfahren der Startpose mit dem Roboterarm derart bzw. mit der Maßgabe, dass in dieser Startpose die Kalibrierreferenz mit der Kamera erfassbar ist.

Hierzu kann in einer Ausführung ein Bediener den Roboterarm manuell steuern, wozu ihm in einer vorteilhaften Weiterbildung in einem Kamerabild eine Referenzmarkierung angezeigt wird, die er durch entsprechende Verstellung des Roboterarms relativ zu dem Abbild der Kalibrierreferenz in dem Kamerabild ausrichtet, was das Anfahren einer vorteilhaften Startpose verbessern, insbesondere vereinfachen und/oder beschleunigen, kann. Gleichermaßen kann die Startpose auch automatisiert angefahren werden, beispielsweise auf Basis einer bekannten Lage der Kamera oder Kalibrierreferenz relativ zum Roboterarm oder einer bildgestützten Suche oder dergleichen.

Nach einer Ausführung der vorliegenden Erfindung weist das Verfahren den Schritt auf:
- automatisiertes Durchführen mehrerer Suchzyklen, wobei in jedem Suchzyklus mit dem Roboterarm eine andere Pose angefahren und in dieser mit der Kamera wenigstens ein Bild von der Kalibrierreferenz aufgenommen wird und ein oder mehrere dieser Suchzyklen auf Basis, in einer Ausführung ausgehend von, der Startpose ermittelt werden. In einer Ausführung werden auch beim Anfahren der jeweiligen (End)Pose mit der Kamera bereits ein oder mehrere Bilder von der Kalibrierreferenz aufgenommen.

Indem die Suchzyklen automatisiert und einer oder mehrere der Suchzyklen dabei auf Basis der Startpose durchgeführt werden, kann vorteilhafterweise gegenüber einem manuellen Verfahren des Roboterarms durch einen Bediener das Kalibrieren verbessert, insbesondere vorteilhafte(re) Posen verwendet und/oder eine Geschwindigkeit, Zuverlässigkeit und/oder Präzision erhöht und/oder das Kalibrieren auch von unerfahren(er)en Bedienern (besser) durchgeführt werden.

Nach einer Ausführung der vorliegenden Erfindung weist das Verfahren den Schritt auf:
- Ermitteln, vorzugsweise automatisiert, einer Transformation zwischen einem bzw. dem kamerafesten Referenzsystem und einem bzw. dem roboterarmfesten Referenzsystem auf Basis bzw. unter Verwendung bzw. in Abhängigkeit von den aufgenommenen Bildern und den Posen des Roboterarms, in denen diese aufgenommen worden sind. Ein Ermitteln der Transformation umfasst in einer Ausführung ein anfängliches Ermitteln der Transformation und eine oder mehrere Aktualisierungen einer bzw. der (bisher) ermittelten Transformation, vorzugsweise ein Aktualisieren einer bzw. der (bisher) ermittelten Transformation nach einem oder mehreren der Suchzyklen (jeweils) auf Basis des aufgenommenen Bildes bzw. der aufgenommenen Bilder des (jeweiligen) Suchzyklus und der Pose(n), in denen diese(s) aufgenommen worden ist.

Die Ermittlung einer solchen Transformation auf Basis von verschiedenen Posen des Roboterarms und Bildern, die mit der Kamera in diesen Posen und damit in verschiedenen Lagen von Kamera und Kalibrierreferenz relativ zueinander von der Kalibrierreferenz aufgenommen worden sind, ist dem Fachmann an sich als sogenannte "hand-eye calibration" bekannt. Ein Kalibrieren der Kamera mittels des Roboterarms und der Kalibrierreferenz umfasst in einer Ausführung das Ermitteln der Transformation, kann insbesondere hieraus bestehen.

In einer Ausführung wird in der Startpose mit der Kamera (ebenfalls) wenigstens ein Bild von der Kalibrierreferenz aufgenommen, wobei die Transformation zwischen dem kamerafesten Referenzsystem und dem roboterarmfesten Referenzsystem auch auf Basis dieses Bildes und der Startpose ermittelt wird. Dadurch kann das Kalibrieren verbessert, insbesondere eine Geschwindigkeit, Zuverlässigkeit und/oder Präzision erhöht werden.

In einer Ausführung werden ein oder mehrere, vorzugsweise kameraspezifische und/oder (kamera)interne bzw. intrinsische, Kameraparameter, vorzugsweise Bildaufnahme- und/oder Bildverarbeitungsparameter wie beispielsweise Blenden- und/oder Belichtungs- und/oder Farb- und/oder Skalierungsparameter oder dergleichen, welche für die jeweilige Kamera spezifisch sind und/oder nicht oder nicht nur von ihrer aktuellen Pose relativ zum Roboterarm abhängen, auf Basis eines oder mehrerer der (bei den Suchzyklen und/oder in der Startpose) aufgenommenen Bilder ermittelt. Dadurch kann das Kalibrieren umfassender und/oder schneller und/oder präzisier erfolgen und/oder die Nutzung der Kamera verbessert werden. Entsprechend kann das Kalibrieren neben dem Ermitteln der Transformation bzw. der entsprechenden extrinsischen Parameter auch das Ermitteln kameraspezifischer und/oder (kamera)interner bzw. intrinsischer Kameraparameter umfassen.

In einer Ausführung wird vor einem oder mehreren der Suchzyklen, vorzugsweise also zwischen zwei oder mehr der Suchzyklen, (jeweils)
- eine Transformation zwischen dem kamerafesten Referenzsystem und dem roboterarmfesten Referenzsystem auf Basis der bisher aufgenommenen Bilder und der Posen des Roboterarms, in denen diese aufgenommen worden sind, ermittelt, in einer Weiterbildung aktualisiert, und dann
- der (jeweilige bzw. aktuelle) Suchzyklus automatisiert auf Basis dieser (bisher) ermittelten Transformation durchgeführt; und dann
- diese (bisher ermittelte) Transformation nach dem Durchführen des (jeweiligen bzw. aktuellen) Suchzyklus auf Basis des darin aufgenommenen Bildes bzw. der darin aufgenommenen Bilder und der Pose(n) des Roboterarms, in denen diese(s) aufgenommen worden ist/sind, (gegebenenfalls weiter) aktualisiert. Dadurch kann das Kalibrieren verbessert, insbesondere in späteren Suchzyklen vorteilhafte(re) Posen verwendet und/oder eine Geschwindigkeit, Zuverlässigkeit und/oder Präzision erhöht werden.

In einer Ausführung wird in einem oder mehreren der Suchzyklen die anzufahrende Pose (jeweils wieder) aus(gehend von) der Startpose (her)aus angefahren. Durch diese "Re-Zentrierung" kann das Kalibrieren verbessert, insbesondere eine Geschwindigkeit, Zuverlässigkeit und/oder Präzision erhöht werden.

Besonders vorteilhaft ist die Kombination einer solchen "Re-Zentrierung" mit der vorstehend erläuterten Ermittlung anzufahrender Posen auf Basis aktualisierter Transformationen, da hierdurch eine Konvergenz des Kalibrierens verbessert, werden kann.

In einer Ausführung wird das distale Glied des Roboterarms aus(gehend von) der Startpose (her)aus translatorisch längs einer ersten Geraden, die relativ zu dem roboterarmfesten Referenzsystem ortsfest vorgegeben ist, in einer Weiterbildung längs einer Koordinatenachse des kamera- oder roboterarmfesten Referenzsystems, bewegt und danach, in einer Weiterbildung wiederum aus(gehend von) der Startpose (her)aus, translatorisch längs einer anderen Geraden, die relativ zu dem roboterarmfesten Referenzsystem ortsfest vorgegeben ist, in einer Weiterbildung längs einer anderen Koordinatenachse dieses Referenzsystems, bewegt und in einer Weiterbildung danach, in einer Ausführung wiederum aus(gehend von) der Startpose (her)aus, translatorisch längs einer (wiederum) anderen Geraden, die relativ zu dem roboterarmfesten Referenzsystem ortsfest vorgegeben ist, in einer Weiterbildung längs einer (wiederum) anderen Koordinatenachse dieses Referenzsystems, bewegt.

Eine, vorzugsweise initiale bzw. Ausgangs-Transformation zwischen dem kamerafesten Referenzsystem und dem roboterarmfesten Referenzsystem wird auf Basis der Veränderung eines mit der Kamera von der Kalibrierreferenz aufgenommenen Bildes infolge dieser translatorischen Bewegungen ermittelt, wobei diese (initiale bzw. Ausgangs-)Transformation danach auf Basis der in (den), vorzugsweise nachfolgend durchgeführten, Suchzyklen aufgenommenen Bilder und Posen des Roboterarms, in denen diese aufgenommen worden sind, aktualisiert wird und/oder einer oder mehrere der Suchzyklen automatisiert auf Basis dieser Transformation durchgeführt wird.

In einer Weiterbildung wird somit aus(gehend von) der Startpose (her)aus das distale Glied mit der Kamera bzw. Kalibrierreferenz translatorisch längs einer ersten Geraden, vorzugsweise ersten Koordinatenachse des kamera- oder roboterfesten Referenzsystems, bewegt und eine, vorzugsweise initiale bzw. Ausgangs-Transformation zwischen dem kamerafesten Referenzsystem und dem roboterarmfesten Referenzsystem auf Basis der Veränderung eines mit der Kamera von der Kalibrierreferenz aufgenommenen Bildes infolge dieser translatorischen Bewegung ermittelt: bewegt sich das Abbild der Kalibrierreferenz in dem Kamerabild nicht (ebenfalls nur) längs dieser ersten Gerade bzw. Koordinatenachse, so kann die Transformation entsprechend, insbesondere derart, dass die entsprechenden Geraden in dem bzw. Achsen des kamerafesten Referenzsystems und roboterfesten Referenzsystems parallel sind, ermittelt werden.

Dann wird, in einer Weiterbildung wiederum aus(gehend von) der Startpose (her)aus, das distale Glied translatorisch längs einer anderen, zweiten Geraden, vorzugsweise Koordinatenachse des Referenzsystems, bewegt, die bevorzugt senkrecht zur ersten Gerade bzw. Achse ist, und die Transformation auf Basis der Veränderung des mit der Kamera von der Kalibrierreferenz aufgenommenen Bildes infolge dieser anderen translatorischen Bewegung ermittelt: bewegt sich das Abbild der Kalibrierreferenz in dem Kamerabild nicht (ebenfalls nur) längs dieser zweiten Gerade bzw. Koordinatenachse, so kann die Transformation entsprechend, insbesondere derart, dass die entsprechenden Geraden in dem bzw. Achsen des kamerafesten Referenzsystems und roboterfesten Referenzsystems parallel sind, vorzugsweise fluchten, ermittelt werden.

Dasselbe kann dann noch für eine (wiederum) andere, dritte Gerade, vorzugsweise Koordinatenachse, die bevorzugt senkrecht zur ersten und zweiten Gerade bzw. Achse ist, wiederholt werden.

Durch diese Bewegungen kann besonders vorteilhaft eine initiale Transformation zwischen dem kamerafesten Referenzsystem und dem roboterarmfesten Referenzsystem ermittelt werden, auf deren Basis dann die, vorzugsweise danach durchgeführten, Suchzyklen besonders vorteilhaft durchgeführt werden können. Dadurch kann das Kalibrieren verbessert, insbesondere vorteilhafte(re) Posen verwendet und/oder eine Geschwindigkeit, Zuverlässigkeit und/oder Präzision erhöht und/oder das Kalibrieren auch von unerfahren(er)en Bedienern (besser) durchgeführt werden.

In einer Ausführung werden zwei oder mehr der anzufahrenden Posen derart ermittelt, dass Kamera und Kalibrierreferenz in diesen Posen jeweils unterschiedliche Positionen und/oder Orientierungen relativ zueinander aufweisen.

In einer bevorzugten Weiterbildung werden zwei oder mehr der anzufahrenden Posen derart ermittelt, dass Kamera und Kalibrierreferenz in diesen Posen jeweils aus(gehend von) der Startpose (her)aus längs einer Koordinatenachse des kamera- oder roboterarmfesten Referenzsystems versetzt und/oder um diese verdreht sind. Vorzugsweise werden in zwei oder mehr der Suchzyklen das distale Glied mit der Kamera bzw. Kalibrierreferenz translatorisch längs bzw. in Richtung unterschiedlicher Koordinatenachse des kamera- oder roboterarmfesten Referenzsystems verschoben und/oder rotatorisch um (diese) unterschiedliche(n) Koordinatenachsen d(ies)es (kamera- oder roboterarmfesten) Referenzsystems verdreht. Dadurch kann das Kalibrieren verbessert, insbesondere vorteilhafte(re) Posen verwendet und/oder eine Geschwindigkeit, Zuverlässigkeit und/oder Präzision erhöht und/oder das Kalibrieren auch von unerfahren(er)en Bedienern (besser) durchgeführt werden.

Zusätzlich oder alternativ werden in einer bevorzugten Weiterbildung (vorzugsweise diese) zwei oder mehr der anzufahrenden Posen derart ermittelt, dass Kamera und Kalibrierreferenz in der (jeweils) später anzufahrenden Pose einen größeren, insbesondere maximalen, minimalen oder mittleren, Abstand voneinander aufweisen. Vorzugsweise wird in zwei oder mehr der Suchzyklen der Abstand zwischen Kamera und Kalibrierreferenz in der anzufahrenden Pose des späteren Suchzyklus gegenüber dem Abstand zwischen Kamera und Kalibrierreferenz in der anzufahrenden Pose des früheren Suchzyklus vergrößert bzw. die anzufahrende Pose des späteren Suchzyklus entsprechend ermittelt. In einer Ausführung werden einer oder mehrere der Suchzyklen mit einem (jeweils) größeren, insbesondere maximalen, minimalen oder mittleren, Abstand zwischen Kamera und Kalibrierreferenz durchgeführt als in einem oder mehreren, vorzugsweise unmittelbar, vorhergehenden Suchzyklus/-en bzw. der Abstand zwischen Kamera und Kalibrierreferenz in zwei oder mehr aufeinanderfolgenden Suchzyklen (jeweils bzw. sukzessive) vergrößert. Dadurch kann das Kalibrieren verbessert, insbesondere vorteilhafte(re) Posen verwendet und/oder eine Geschwindigkeit, Zuverlässigkeit und/oder Präzision erhöht und/oder das Kalibrieren auch von unerfahren(er)en Bedienern (besser) durchgeführt werden.

In einer Ausführung werden eine oder mehrere der anzufahrenden Posen der Suchzyklen, in einer Weiterbildung während des jeweiligen Suchzyklus, in einer anderen Weiterbildung vor Durchführung des jeweiligen Suchzyklus, derart bzw. mit der Maßgabe ermittelt, dass die Kalibrierreferenz (bei bzw. in dieser Pose) an einer Grenze eines Erfassungsbereichs der Kamera angeordnet ist.

Alternativ oder besonders bevorzugt zusätzlich wird bei einer oder mehreren Bewegungen des distalen Glieds des Roboterarms, insbesondere während eines oder mehrerer der Suchzyklen, (jeweils) eine Erfassung der Kalibrierreferenz durch die Kamera überwacht und die (jeweilige) Bewegung beendet, falls - in einer Ausführung - die Kalibrierreferenz an eine Grenze eines bzw. des Erfassungsbereichs der Kamera gelangt oder - in einer anderen Ausführung - den Erfassungsbereich der Kamera verlässt.

Besonders vorteilhaft können die beiden vorgenannten Merkmale miteinander kombiniert werden, insbesondere, indem in einer Ausführung das distale Glied des Roboterarms bewegt und dabei eine Erfassung der Kalibrierreferenz durch die Kamera überwacht wird, die (jeweilige) Bewegung beendet wird, falls die Kalibrierreferenz (in einer Ausführung) an eine Grenze eines Erfassungsbereichs der Kamera gelangt oder (in einer anderen Ausführung) den Erfassungsbereich der Kamera verlässt, und die Pose, bei der die Kalibrierreferenz an der Grenze des Erfassungsbereichs der Kamera liegt, als Pose verwendet wird, in der mit der Kamera das entsprechende Bild von der Kalibrierreferenz aufgenommen wird, welches zusammen mit dieser Pose zum Ermitteln der Transformation zwischen einem kamerafesten Referenzsystem und einem roboterarmfesten Referenzsystem verwendet wird.

Besonders vorteilhaft sind zwei oder mehr der genannten Merkmale in einer der beiden folgenden Ausführungen kombiniert:
Zunächst wird, vorzugsweise manuell beziehungsweise durch einen Bediener, der Roboterarm in eine Startpose bewegt bzw. gesteuert, in der die Kalibrierreferenz von der Kamera erfassbar ist, besonders bevorzugt in dem Kamerabild zentriert und/oder relativ zu einer eingeblendeten Referenzmarkierung ausgerichtet ist.

Danach wird vorzugsweise eine initiale Transformation zwischen kamerafestem und roboterarmfestem Referenzsystem ermittelt. Dies ist besondere für die nachfolgend erläuterte Variante B vorteilhaft, kann aber auch bei der Variante A die Kalibrierung vorteilhaft (weiter) verbessern.

Für die bzw. bei der Ermittlung der initialen Transformation bewegt der Roboterarm, vorzugsweise langsam, das distale Glied längs einer ersten Achse des kamera- oder des roboterarmfesten Referenzsystems, um die erste Achse des kamerafesten Referenzsystems und die erste Achse des roboterarmfesten Referenzsystems aneinander auszurichten bzw. die Transformation so zu ermitteln, dass diese beiden ersten Achsen parallel zueinander sind. Dies wird dann für die zu den ersten Achsen senkrechten zweiten Achsen und gegebenenfalls für die zu den ersten und zweiten Achsen senkrechten dritten Achsen wiederholt, in einer Weiterbildung (jeweils) wiederum aus(gehend) von der Startposition (her)aus. Wenn beispielsweise das distale Glied mit Kamera bzw. Kalibrierreferenz im roboterarmfesten Referenzsystem längs bzw. in Richtung seiner x-Achse verschoben wird, sich aber im Kamerabild eine Bewegung der Kalibrierreferenz in x-y-Richtung ergibt, wird das kamerafeste Referenzsystem um die z-Achse verdreht, bis auch im kamerafesten Referenzsystem nur eine Bewegung in Richtung der x-Achse erfolgt bzw. die Transformation entsprechend ermittelt.

In (einer) Variante A verschiebt und verdreht der Roboterarm das distale Glied in mehreren Suchzyklen jeweils in unterschiedliche (anzufahrende bzw. angefahrene bzw. End)Posen, wobei bzw. derart dass der Abstand zwischen Kalibrierreferenz und Kamera in aufeinanderfolgenden (anzufahrenden bzw. angefahrenen bzw. End)Posen bzw. Suchzyklen sukzessive zunimmt. Dabei wird in den einzelnen Suchzyklen jeweils solange verfahren, bis die Kalibrierreferenz an einer Grenze eines Erfassungsbereichs der Kamera angeordnet ist bzw. den Erfassungsbereich der Kamera verlässt, und in der Pose, in der die Kalibrierreferenz an einer Grenze des Erfassungsbereichs angeordnet ist, ein Bild aufgenommen, auf dessen Basis die Transformation aktualisiert wird. Dann wird der Roboterarm, wieder in die Startpose zurückgefahren und der nächste Suchzyklus durchgeführt. Auf diese Weise wird iterativ ein möglichst großer Suchbereich mit, insbesondere aufgrund der Abstandsvergrößerung, vorteilhaft unterschiedlichen Posen verwendet. Dadurch kann das Kalibrieren verbessert, insbesondere eine Geschwindigkeit, Zuverlässigkeit, Konvergenz und/oder Präzision erhöht werden.

In (einer) Variante B wird die ermittelte initiale Transformation zwischen kamerafestem und roboterarmfestem Referenzsystem verwendet, um das distale Glied nacheinander längs bzw. in Richtung unterschiedlicher Koordinatenachsen des kamera- oder roboterarmfesten Referenzsystems zu verschieben und dabei vorzugsweise zusätzlich um die jeweilige Achse zu verdrehen. Dabei kann wieder eine Erfassung der Kalibrierreferenz durch die Kamera überwacht werden, um zu vermeiden, dass die Kalibrierreferenz einen Erfassungsbereich der Kamera verlässt. Wiederum wird in der angefahrenen Pose ein Bild und in einer Weiterbildung beim Anfahren der Pose ein oder mehrere weitere Bilder aufgenommen, auf dessen bzw. deren Basis die Transformation aktualisiert wird, und der Roboterarm wieder in die Startpose zurückgefahren und der nächste Suchzyklus durchgeführt.

Das Durchführen von Suchzyklen wird (jeweils) beendet, falls genügend Bilder aufgenommen wurden bzw. die Kalibrierung ausreichend genau ist. Zusätzlich wird in einer Ausführung das Durchführen beendet, falls die Kalibrierreferenz einen Erfassungsbereich der Kamera verlässt oder der Roboterarm mit seiner Umgebung kollidiert.

Nach einer Ausführung der vorliegenden Erfindung ist ein System zum Kalibrieren der Kamera mittels des Roboterarms und der Kalibrierreferenz, insbesondere hard- und/oder software-, insbesondere programmtechnisch, zur Durchführung eines hier beschriebenen Verfahrens eingerichtet.

In einer Ausführung weist das System auf:
- die Kamera; und/oder
- den Roboterarm; und/oder
- die Kalibrierreferenz; und/oder
- Mittel zum Erfassen der Kalibrierreferenz mit der Kamera in einer Startpose des Roboterarms; und/oder
- Mittel zum Durchführen mehrerer Suchzyklen, wobei in jedem Suchzyklus mit dem Roboterarm eine andere Pose angefahren und in dieser mit der Kamera wenigstens ein Bild von der Kalibrierreferenz aufgenommen wird und wobei wenigstens ein Suchzyklus auf Basis der Startpose durchgeführt wird; und/oder
- Mittel zum Ermitteln einer Transformation zwischen einem kamerafesten Referenzsystem und einem roboterarmfesten Referenzsystem auf Basis der aufgenommenen Bilder und der Posen des Roboterarms, in denen diese aufgenommen worden sind.

Ein System und/oder Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule, insbesondere einen oder mehrere, vorzugsweise entsprechend programmierte, Computer, aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen.

Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Kamera kalibrieren und/oder Kamera und/oder Roboterarm (hierzu) steuern kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen eines Programms bzw. seiner Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das System bzw. sein(e) Mittel.

Weitere Vorteile, Merkmale und vorteilhafte Weiterbildungen der vorliegenden Erfindung ergeben sich aus den Unteransprüchen und den Ausführungsbeispielen. Hierzu zeigt, teilweise schematisiert:
- Fig. 1:: ein System zum Kalibrieren einer Kamera mittels eines Roboterarms und einer Kalibrierreferenz nach einem Verfahren nach einer Ausführung der vorliegenden Erfindung;
- Fig. 2:: ein Kamerabild der Kamera;
- Fig. 3:: das System in einer anderen Pose des Roboterarms;
- Fig. 4:: das System in einer Abwandlung; und
- Fig. 5:: das Verfahren.

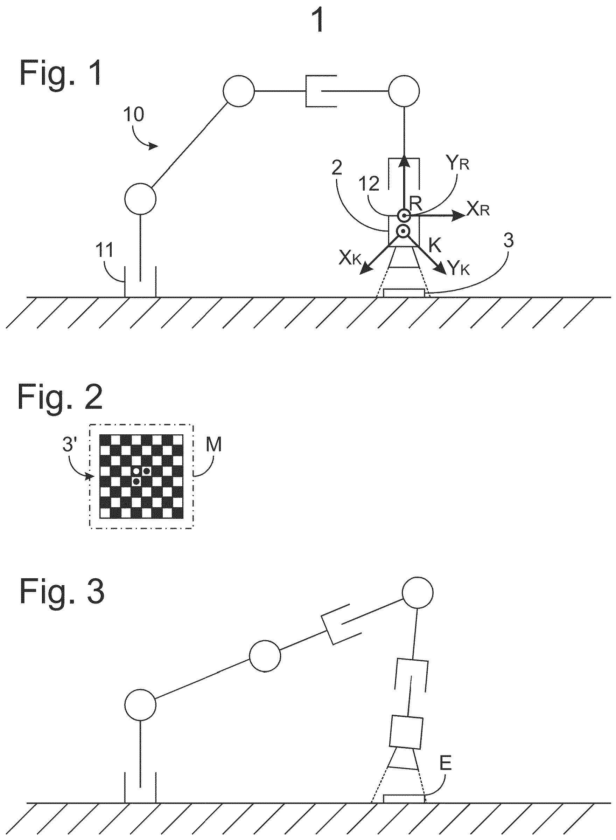

Fig. 1 zeigt ein System zum Kalibrieren einer Kamera 2 mittels eines Roboterarms 10 und einer Kalibrierreferenz 3 nach einem Verfahren nach einer Ausführung der vorliegenden Erfindung.

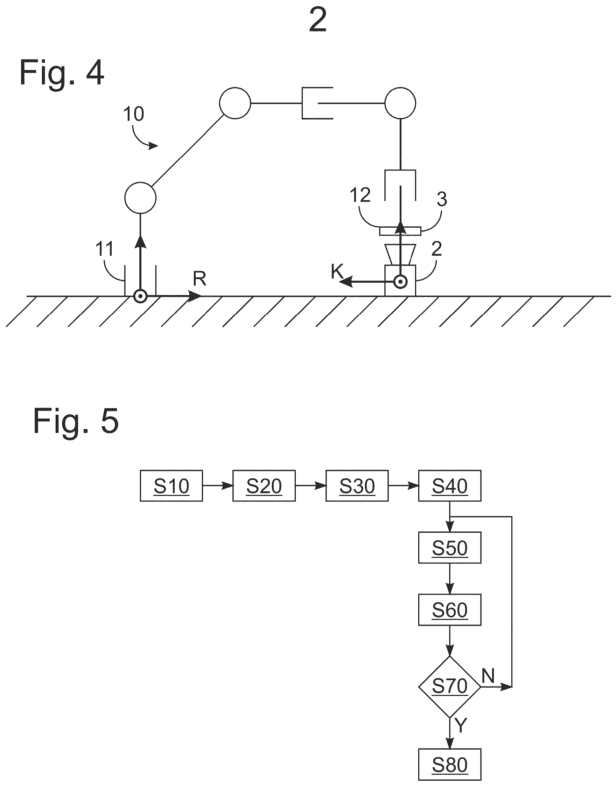

In einem ersten Schritt S10 (vgl. Fig. 5) wird der Roboterarm 10 in eine Startpose gesteuert, in der das Abbild 3' der Kalibrierreferenz 3 im in Fig. 2 gezeigten Kamerabild der Kamera 2 bezüglich einer Referenzmarkierung M zentriert ist. In dieser wird ein Bild aufgenommen, auf dessen Basis bereits kameraspezifische bzw. (kamera)interne bzw. intrinsische Kameraparameter ermittelt werden.

Dann wird, ausgehend von dieser Startpose, in einem Schritt S20 das distale Glied 12 des Roboterarms 10, an dem die Kamera 2 angeordnet ist, längs einer x-Achse X_{R} eines roboterarmfesten Koordinaten- bzw. Referenzsystem R verfahren. Wandert dabei das Abbild 3' in dem Kamerabild nicht nur in Richtung der x-Achse X_{K} eines kamerafesten Koordinaten- bzw. Referenzsystems K, sondern beispielsweise in Richtung der x-Achse und zugleich in Richtung einer y-Achse Y_{K} von K, so wird eine Transformation zwischen den beiden Systemen R, K, die beispielsweise defaultmäßig als Einheitsmatrix initialisiert sein kann, entsprechend ermittelt bzw. aktualisiert, beispielsweise durch eine Drehung um die z-Achse, die die x-Achsen der beiden Systemen R, K parallel zueinander ausrichtet. Analog werden in Schritten S30, S40 auch die y- und z-Achsen parallel zueinander ausgerichtet und so eine initiale bzw. Ausgangstransformation ermittelt.

Dann werden Suchzyklen durchgeführt, in denen jeweils - in einer Variante A - mit zunehmendem Abstand zwischen Kamera 2 und Kalibrierreferenz 3 die Kamera 2 durch den Roboterarm 10 bewegt wird, bis das Abbild 3' der Kalibrierreferenz 3 am Rand eines Erfassungsbereichs E der Kamera 2 liegt (vgl. Fig. 2), wobei in dieser Pose und in einer Weiterbildung auch in Zwischenposen beim Anfahren des Rands mit der Kamera 2 Bilder von der Kalibrierreferenz 3 aufgenommen werden (Fig. 5: Schritt S50).

Danach wird die Transformation auf Basis dieser Bilder und Posen aktualisiert (Fig. 5: Schritt S60). Wird ermittelt, dass die Transformation noch nicht ausreichend genau ist (S70: "N"), wird ein neuer Suchzyklus mit größerem Abstand zwischen Kamera 2 und Kalibrierreferenz 3 durchgeführt, andernfalls oder auch falls die Kalibrierreferenz 3 den Erfassungsbereich E der Kamera 2 verlässt oder der Roboterarm 10 mit seiner Umgebung kollidiert (S70: jeweils "Y") wird das Verfahren beendet (Fig. 5: Schritt S80).

In einer im Übrigen analogen Variante B wird, ausgehend von der Startpose, im jeweiligen Suchzyklus distales Glied 12 bzw. Kamera 2 jeweils längs einer Koordinatenachse des roboterarmfesten Koordinaten- bzw. Referenzsystems R in eine vorbestimmte Pose verfahren und dabei um diese Achse verdreht (S50) und auch hier die Transformation auf Basis der dabei aufgenommenen Bilder und Posen, in denen diese aufgenommen worden sind, aktualisiert (S60).

Fig. 4 zeigt eine Abwandlung des Systems bzw. Verfahrens, wobei hier umgekehrt die Kalibrierreferenz 3 an dem distalen Glied 12 des Roboterarms 10 angeordnet und die Kamera 2 relativ zur proximalen Basis 11 des Roboterarms ortsfest ist, wobei das Verfahren bzw. System im Übrigen analog zu der vorstehend beschriebenen Ausführung ist, so dass hierauf Bezug genommen wird.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 2: Kamera
- 3: Kalibrierreferenz
- 3': Abbild
- 10: Roboterarm
- 11: Basis
- 12: distales Glied
- E: Erfassungsbereich(sgrenze)
- K: kamerafestes Koordinatensystem
- M: Referenzmarkierung
- R: roboterarmfestes Koordinatensystem
- X_{K}: x-Achse von K
- Y_{K}: y-Achse von K
- X_{R}: x-Achse von R
- Y_{R}: y-Achse von R

## Patentansprüche

1. Verfahren zum Kalibrieren einer Kamera (2) mittels eines Roboterarms (10) und einer Kalibrierreferenz (3), wobei
- die Kamera an einem distalen Glied (12) des Roboterarms angeordnet und die Kalibrierreferenz relativ zu einer proximalen Basis (11) des Roboterarms ortsfest ist;
oder
- die Kalibrierreferenz an einem distalen Glied (12) des Roboterarms angeordnet und die Kamera relativ zu einer proximalen Basis (11) des Roboterarms ortsfest ist;
wobei das Verfahren die Schritte aufweist:
- Erfassen (S10) der Kalibrierreferenz mit der Kamera in einer Startpose des Roboterarms;
- automatisiertes Durchführen (S50) mehrerer Suchzyklen, wobei in jedem Suchzyklus mit dem Roboterarm eine andere Pose angefahren und in dieser mit der Kamera wenigstens ein Bild von der Kalibrierreferenz aufgenommen wird und wenigstens ein Suchzyklus auf Basis der Startpose durchgeführt wird; und
- Ermitteln einer Transformation (S60) zwischen einem kamerafesten Referenzsystem (K) und einem roboterarmfesten Referenzsystem (R) auf Basis der aufgenommenen Bilder und der Posen des Roboterarms, in denen diese aufgenommen worden sind.

2. Verfahren nach Anspruch 1, **dadurch gekennzeichnet, dass** in der Startpose mit der Kamera wenigstens ein Bild von der Kalibrierreferenz aufgenommen wird, wobei die Transformation zwischen dem kamerafesten Referenzsystem und dem roboterarmfesten Referenzsystem auch auf Basis dieses Bildes und der Startpose ermittelt wird (S20, S30, S40).

3. Verfahren nach einem der vorhergehenden Ansprüche, **dadurch gekennzeichnet, dass** wenigstens ein Kameraparameter auf Basis eines oder mehrerer der aufgenommenen Bilder ermittelt wird.

4. Verfahren nach einem der vorhergehenden Ansprüche, **dadurch gekennzeichnet, dass**
- vor wenigstens einem der Suchzyklen eine Transformation zwischen dem kamerafesten Referenzsystem und dem roboterarmfesten Referenzsystem auf Basis der bisher aufgenommenen Bilder und der Posen des Roboterarms, in denen diese aufgenommen worden sind, ermittelt wird;
- dieser Suchzyklus dann automatisiert auf Basis dieser ermittelten Transformation durchgeführt wird; und
- diese Transformation nach dem Durchführen dieses Suchzyklus auf Basis der darin angefahrenen Pose und des wenigstens einen darin aufgenommenen Bildes aktualisiert wird.

5. Verfahren nach einem der vorhergehenden Ansprüche, **dadurch gekennzeichnet, dass** in einem oder mehreren der Suchzyklen die anzufahrende Pose aus der Startpose heraus angefahren wird.

6. Verfahren nach einem der vorhergehenden Ansprüche, **dadurch gekennzeichnet, dass** das distale Glied des Roboterarms aus der Startpose heraus translatorisch längs einer ersten Geraden, die relativ zu dem roboterarmfesten Referenzsystem ortsfest vorgegeben ist, und danach ein- oder mehrfach längs einer anderen Geraden, die relativ zu dem roboterarmfesten Referenzsystem ortsfest vorgegeben ist, bewegt wird, wobei eine Transformation zwischen dem kamerafesten Referenzsystem und dem roboterarmfesten Referenzsystem auf Basis der Veränderung eines mit der Kamera von der Kalibrierreferenz aufgenommenen Bildes infolge dieser translatorischen Bewegungen ermittelt wird, wobei diese Transformation danach auf Basis in Suchzyklen angefahrener Posen und darin aufgenommener Bilder aktualisiert wird und/oder wenigstens einer der Suchzyklen automatisiert auf Basis dieser Transformation durchgeführt wird.

7. Verfahren nach einem der vorhergehenden Ansprüche, **dadurch gekennzeichnet, dass** wenigstens zwei der anzufahrenden Posen derart ermittelt werden, dass Kamera und Kalibrierreferenz in diesen Posen unterschiedliche Positionen und/oder Orientierungen relativ zueinander aufweisen, insbesondere aus der Startpose heraus längs einer Koordinatenachse des kamera- oder roboterarmfesten Referenzsystems versetzt und/oder um diese verdreht sind und/oder Kamera und Kalibrierreferenz in der später anzufahrenden Pose einen größeren Abstand aufweisen.

8. Verfahren nach einem der vorhergehenden Ansprüche, **dadurch gekennzeichnet, dass** wenigstens eine der anzufahrenden Posen derart ermittelt wird, dass die Kalibrierreferenz an einer Grenze eines Erfassungsbereichs (E) der Kamera angeordnet ist.

9. Verfahren nach einem der vorhergehenden Ansprüche, **dadurch gekennzeichnet, dass** bei wenigstens einer Bewegung des distalen Glieds des Roboterarms, insbesondere während eines Suchzyklus, eine Erfassung der Kalibrierreferenz durch die Kamera überwacht und diese Bewegung beendet wird, falls die Kalibrierreferenz an eine Grenze eines Erfassungsbereichs (E) der Kamera gelangt oder den Erfassungsbereich der Kamera verlässt.

10. System zum Kalibrieren einer Kamera (2) mittels eines Roboterarms (10) und einer Kalibrierreferenz (3), das zur Durchführung eines Verfahrens nach einem der vorhergehenden Ansprüche eingerichtet ist und/oder aufweist:
Mittel zum Erfassen einer Kalibrierreferenz mit einer Kamera in einer Startpose eines Roboterarms, wobei die Kamera an einem distalen Glied des Roboterarms angeordnet und die Kalibrierreferenz relativ zu einer proximalen Basis des Roboterarms ortsfest oder die Kalibrierreferenz an einem distalen Glied des Roboterarms angeordnet und die Kamera relativ zu einer proximalen Basis des Roboterarms ortsfest ist;
Mittel zum automatisierten Durchführen mehrerer Suchzyklen, wobei in jedem Suchzyklus mit dem Roboterarm eine andere Pose angefahren und in dieser mit der Kamera wenigstens ein Bild von der Kalibrierreferenz aufgenommen wird und wenigstens ein Suchzyklus auf Basis der Startpose durchgeführt wird; und
Mittel zum Ermitteln einer Transformation zwischen einem kamerafesten Referenzsystem und einem roboterarmfesten Referenzsystem auf Basis der aufgenommenen Bilder und der Posen des Roboterarms, in denen diese aufgenommen worden sind.

11. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 10 den oder die Computer oder das System dazu veranlassen, ein Verfahren nach einem der Ansprüche 1 bis 9 durchzuführen.
